# EUROPÄISCHE PATENTSCHRIFT

(11) **EP 1 733 700 B1**
(45) Veröffentlichungstag und Bekanntmachung des Hinweises auf die Patenterteilung: **11.08.2010**
(21) Anmeldenummer: 06004682.8
(22) Anmeldetag: 14.03.2001
(51) Int. Cl.: A61C 17/22

(54) **Vorrichtung zur Zahnreinigung**
Device for cleaning teeth
Dispositif de nettoyage des dents

(43) Veröffentlichungstag der Anmeldung: 20.12.2006
(62) Teilanmeldung aus: 01925448.1
(73) Patentinhaber: Braun GmbH, 61476 Kronberg (DE)
(72) Erfinder: Hilscher, Alexander, 61476 Kronberg (DE); Reick, Hansjörg, 61449 Steinbach (DE); Stratmann, Martin, 60318 Frankfurt (DE); Trawinski, Peter, 64331 Weiterstadt (DE); Vorbeck, Wolfgang, 65510 Idstein-Eschenhahn (DE); Schwarz-Hartmann, Armin, 55234 Wendelsheim (DE)

(56) Entgegenhaltungen:
- GB-A- 1 167 444
- JP-A- 2001 037 788
- US-A- 5 099 536
- US-B1- 6 193 510

## Beschreibung

Die Erfindung betrifft eine elektrische Zahnputzvorrichtung. Insbesondere betrifft die Erfindung das Handteil einer solchen Zahnputzvorrichtung, das wenigstens ein oder mehrere Kupplungsteile zum Ankuppeln verschiedener Putzwerkzeuge, einen Antrieb zum Antreiben des jeweils angekuppelten Putzwerkzeugs, sowie eine Steuereinrichtung besitzt, wobei die Steuereinrichtung eine berührungslos arbeitende Betriebssperrvorrichtung aufweist, die von einem als Magnetfeldgeber ausgebildeten Freischaltorgan freischaltbar ist. Schließlich betrifft die Erfindung die Putzwerkzeuge, insbesondere Aufsteckbürsten zum Ankuppeln an ein solches Handteil. Derartige Handteile bzw. Aufsteckbürsten sind bereits aus dem Stand der Technik US 5099536 bzw. GB 1167444 A bekannt.

Zahnputzvorrichtungen wie elektrische Zahnbürsten oder elektrische Mundduschen besitzen in der Regel einen Griff bzw. ein Handteil oder Handstück, auf das verschiedene Putzwerkzeuge wie Aufsteckbürsten, Spritzdüsen, Interdentalbürsten, aufsteckbar sind, so daß mehrere Benutzer mit jeweils eigenen, insbesondere personenbezogenen Putzwerkzeugen die Zahnputzvorrichtung nutzen können. Solche elektrischen Zahnbürsten sind zum Beispiel aus der DE 19627752 A1 oder der EP 0624079 B1 bekannt.

Aus der DE 299 15 858 U1 ist eine Zahnputzvorrichtung bekannt, bei der jede der verschiedenen Zahnbürsten nur jeweils an einer bestimmten Einstecköffnung einer Konsole angeschlossen werden kann. Dadurch läuft dann das für diese spezielle Zahnbürste vorgesehene Programm ab. Allerdings ist es insbesondere für Kinder mühsam, die für die personenbezogene Zahnbürste vorgesehene individuelle Einstecköffnung zu finden und den Stecker dort zu adaptieren. Außerdem ist diese Konsole herstellungstechnisch sehr aufwendig, da zum einen eine Vielzahl unterschiedlicher Einstecköffnungen vorzusehen sind, wobei auch jede der Zahnbürsten einen unterschiedlichen, der jeweiligen Einstecköffnung zugeordneten Stecker aufzuweisen hat.

Bei einer weiteren Vorrichtung nach US 5184959 ist jeder Handzahnbürste in einer Konsole ein eigener Einsteckschlitz zugeordnet, so daß jeder Zahnbürste durch die Konsole ein individuelles Putzzeitsignal zugeordnet werden kann. Diese Anordnung ist herstellungstechnisch sehr aufwendig, wobei benutzerspezifische Daten des Zahnputzvorganges nicht erfaßt und gespeichert werden können.

Solche Zahnputzvorrichtungen sind in mehrerer Hinsicht verbesserungsfähig. Insbesondere besteht ein Problem darin, daß sich bei akkubetriebenen Zahnbürsten der Akku vorzeitig leeren kann. Dies kann z. B. dann passieren, wenn die Zahnbürste nicht ordnungsgemäß verpackt in eine Reisetasche oder dergleichen verstaut wird und sich der Antrieb ungewollt einschaltet. Ferner kann es bisweilen vorkommen, daß auf das Handteil nicht richtig passende Aufsteckbürsten aufgesteckt werden, so daß es in Folge der fehlenden Kompatibilität zu Beschädigungen des Handteils, z. B. der Kupplungsabschnitte, insbesondere im Bereich des Antriebsstrangs kommen kann, oder aber aufgrund der fehlenden Kompatibilität eine ordnungsgemäße Reinigungsfunktion nicht gewährleistet ist.

Des weiteren sind auch Vorrichtungen zur Zahnreinigung, nämlich elektrisch betriebene Zahnbürsten mit Handteil und aufsteckbarem Bürstenteil der Firma Bausch & Lomb, Modell Interplak (registrierte Marke), z. B. PB-6, ca. 1992, in den USA in den Handel gelangt, bei denen das Handteil in einem Gehäuseausschnitt einen mechanisch zu betätigenden Schalter besitzt, der gegebenenfalls von einer wasserdichten Schutzfolie abgedeckt ist, wobei ein Schaltkontakt dieses Schalters mittels eines Gehäuseansatzes des Kunststoffgehäuses des Bürstenteils dann betätigt wird, wenn das Bürstenteil auf das Handteil aufgesteckt ist. Ist bei aufgestecktem Bürstenteil der Schaltkontakt betätigt, läßt sich der Antrieb der Zahnbürste mittels eines Einschalters am Handstück einschalten. Vermutlich sind diese Maßnahmen aus Sicherheitsgründen vorgesehen, da im Gegensatz zu vielen anderen Handteilen bei elektrischen Zahnbürsten die Antriebswelle bei der vorerwähnten Zahnbürste in Richtung der Längsachse vor- und zurückschwingt. Der Hub der Welle ist beträchtlich, so daß ein Einschalten des Handteils ohne aufgestecktes Bürstenteil zu einer Verletzungsgefahr führen könnte, da die Antriebswelle eine Hubbewegung ähnlich einer Nähnadel einer Nähmaschine durchführt. Gegen diesen Stand der Technik sind die das Handteil bzw. Bürstenteil betreffenden unabhängigen Ansprüche abgegrenzt.

Aus der DE 28 26 008 C2 ist ein Schalter zur Betätigung einer elektrischen Zahnbürste mit einem an einem ringförmigen Betätigungsteil angeordneten Permanentmagneten bekannt, wobei das ringförmige Betätigungsteil axial verschiebbar auf dem Gehäuse angeordnet ist. Der Permanentmagnet des ringförmigen Betätigungsteils aktiviert bzw. deaktiviert einen im Inneren des Gehäuses der Zahnbürste angeordneten magnetempfindlichen Schalter, beispielsweise ein Reed-Relais. Das ringförmige Betätigungsteil kann von dem Gehäuse der Zahnbürste abgezogen werden, so daß nach dem Entfernen eine leichte Reinigung des Gehäuses sowie des Betätigungsteils möglich ist. Im übrigen dient das Entfernen des Betätigungsteils zugleich auch als Einschaltschutz für die elektrische Zahnbürste, so daß vermieden ist, daß sich die Zahnbürste mit abgezogenem Betätigungsteil beim Transport in einer Tasche oder in einem Koffer selbsttätig einschalten kann und ein unbeabsichtigtes Entleeren der Akkumulatoren bzw. Batterien vermieden ist.

Diese vorerwähnten Maßnahmen zur Bereitstellung einer sogenannten ReisesicherungsFunktion haben sich in der Praxis jedoch nicht bewährt, da beispielsweise bei der Interplak-Lösung erhebliche Aufsteck- bzw. Abzugskräfte zum Aufstecken bzw. Abziehen des Bürstenteils vom Handteil erforderlich sind, um den im Handteil vorgesehenen Schaltkontakt zu betätigen. Auch besteht das Problem der Verschmutzung der Schaltkontakte bzw. des hohen Fertigungsaufwandes zur schmutz- oder wasserdichten Abdeckung des Schaltkontaktes. Der abziehbare Schaltring der Patentschrift DE 28 26 008 C2 dient ebenfalls zur Bereitstellung einer Reisesicherungsfunktion, doch stellt sich hierbei das Problem, daß der abgezogene Schaltring gerade auf Reisen verlorengehen kann und dann das Handstück trotz voller Akkumulatoren oder Batterien dennoch nicht in Gang setzbar ist. Im übrigen bieten diese bekannten Lösungen zur Bereitstellung einer Reisesicherungsfunktion wenig Flexibilität im Hinblick auf weitere Komfortfunktionen, z. B. eine selbsttätige Anpassung der Betriebsparameter eines Handteils an ein spezifisches Bürstenteil oder die benutzerspezifische Sammlung und Speicherung von Putzdaten oder dergleichen.

Des weiteren ist aus der EP 0 848 921 A1 eine Bürste für den Heimwerkergebrauch sowie ein Herstellungsverfahren hierfür bekannt geworden, bei dem ein sogenanntes Tag als Datenspeicher unlösbar in der Bürste selbst, nämlich zwischen einem Borstenträger und einem topfförmigen Halteelement befestigt ist. In dem Tag sollen dann Daten bezüglich Sicherheitsnormen, der maximalen Drehzahl, dem Land der Herstellung, die Marke des Herstellers, Artikelnummer, Verbindungsdurchmesser und beispielsweise ein Barcode gespeichert werden, der mittels eines elektronischen Lesesystems beispielsweise an der Kasse des Heimwerkermarktes auslesbar ist. Der Tag kann insbesondere auch Aluminium oder einem wärmewiderstandsfähigen Kunststoffmaterial bestehen, da die Bürsten während des Gebrauches äußerst hohen Temperaturen ausgesetzt sind. Offensichtlich handelt es sich bei diesem Tag um eine Aluminium- oder Kunststoffscheibe, deren Oberfläche mit optisch lesbaren Informationen versehen und unlösbar mit dem Bürstenkörper verbunden ist. Derartige Codes haben jedoch den Nachteil einer recht geringen Speicherfähigkeit und sind nicht umprogrammierbar. Auch die Lesbarkeit setzt das Vorhandensein einer freien optischen Zugänglichkeit des Codes voraus, was nicht in allen Anwendungsfällen gegeben ist.

Weiterhin sind eine Vielzahl von elektronischen Warensicherungssystemen bekannt, bei denen Sicherungsetiketten, die beispielsweise elektrische Schwingkreise oder weichmagnetische Sensorstreifen umfassen, an der Ware angebracht werden und in Schleusen am Ladenausgang von elektromagnetischen Federn angeregt werden. Bei unbezahlter Ware, d. h. aktiven Sicherungsetiketten, wird ein Signal detektiert und ein Alarm ausgelöst. Einzelheiten hierzu finden sich beispielsweise in dem Artikel "Der große Lauschangriff auf Ladendiebe" Gieselher Herzer, Physikalische Blätter 57 (2001), Nr. 5, Seite 43 bis 48.

Ein Unterfall dieser Systeme sind die sogenannten RFID-Systeme (radio-frequencyidentification), die bei kontaktiosen Chipkarten, neuerdings bei Autoschlüsseln oder auch bei Mülltonnen, eingesetzt werden, um im letztgenannten Fall eine von der tatsächlichen Leerung der Mülltonnen abhängige Kostenabrechnung zu ermöglichen.

Derartige Systeme sind beispielsweise aus der US 5,812,065, WO 00/42584, US 6,177,870. WO 00/39768, DE 199 53 651 A1 oder auch WO 98/24527 bekannt, wobei mittels des Systems der letztgenannten Schrift In einem elektronischen Spielzeug zwischen der Figur, die einen Transponder aufweist, und einem Basisgerät, welches ein Lesegerät aufweist, Daten ausgetauscht werden können.

Die zweiteilige Form der Ansprüche 1 und 17 basiert auf der JP-A-2001-377887.

Der vorliegenden Erfindung liegt daher die Aufgabe zugrunde, ein verbessertes Handteil einer elektrischen Zahnputzvorrichtung sowie verbesserte Putzwerkzeuge hierfür zu schaffen, die Nachteile des Standes der Technik vermeiden, diesen weiterbilden und weitere Vorteile erzielen. Insbesondere sollen ein komfortabler Einschaltschutz bereitgestellt und/oder eine unsachgemäße Verwendung der Zahnputzvorrichtung vermieden werden.

Die genannte Aufgabe wird bei einem Handteil einer elektrischen Zahnputzvorrichtung der eingangs genannten Art erfingdungsgemäß im wesentlichen dadurch gelöst, daß die Betriebssperrvorrichtung von dem Freischaltorgan dann freischallbar ist bzw. freigeschaltet wird, wenn das Putzwerkzeug an dem Handteil angekuppelt ist. Hinsichtlich des Putzwerkzeugs der eingangs genannten Art wird die Aufgabe dadurch gelöst, daß es ein als Magnetfeldgeber ausgebildetes Freischaltorgan zur berührungslose Freischaltung der Betriebssperrvorrichtung des Handteils besitzt. Bevorzugte Ausgestaltungen der Erfindung sind Gegenstand abhängiger Ansprüche.

Durch diese Maßnahmen ist also ein Schutz gegen ungewolltes Einschalten der Zahnputzvorrichtung bereitgestellt. Der Antrieb des Handteils ist nur dann einschaltbar, wenn ein kompatibles Putzwerkzeug dem Handteil aufgesteckt ist und infolge dessen die Betriebsspenvorrichtung freigeschaltet wird. Ein unbeabsichtigtes Einschalten im Reisekoffer kann einfach durch Entfernen des Putzwerkzeugs vom Handteil verhindert werden. Ein unbeabsichtigtes vorzeitiges Entladen eines Antriebs-Akkus ist nicht möglich. Zusätzliche konstruktive oder mechanische Maßnahmen zur Realisierung der Einschaltsperre beispielsweise am Schalter des Handteils sind nicht notwendig.

In Weiterbildung der Erfindung kann vorgesehen sein, daß die Betriebssperrvorrichtung ausschließlich durch das Freischaltorgan des Putzwerkzeugs freischaltbar ist, insbesondere nur dann, wenn das Putzwerkzeug ordnungsgemäß an das Handteil gekuppelt ist. Dies kann dadurch erreicht werden, daß das Freischaltorgan an dem Putzwerkzeug und eine handteilseitige Erfassungseinrichtung für das Freischaltorgan derart ausgebildet und aufeinander abgestimmt sind, daß das Freischaltorgan bevorzugt in einer vorbestimmten Ausrichtung und/oder Position relativ zu der Erfassungseinrichtung und damit zum Handteil wirksam ist.

Um zu verhindern, daß das Handteil, insbesondere der Antriebsstrang bzw. dessen Kupplung durch Aufstecken nicht passender Aufsatzbürsten beschädigt wird, kann das Freischaltorgan als Codierung ausgebildet sein, die das Putzwerkzeug identifiziert. Das Handteil weist eine Codierungs-Erfassungseinrichtung auf, die die Codierung des jeweils aufgesetzten Putzwerkzeugs erfaßt. Die Betriebssperrvorrichtung wird nur dann freigeschaltet, wenn die Codierungs-Erfassungseinrichtung die richtige Codierung liest und ein entsprechendes Signal erzeugt. Das Handteil erfaßt also das gerade aufgesetzte Putzwerkzeug und steuert in Abhängigkeit des erfaßten Putzwerkzeugs die Freischaltung des Antriebs.

Die Codierungs-Erfassungseinrichtung kann grundsätzlich in vorgegebenen Intervallen eine Codierung des Putzwerkzeugs abfragen. In einer besonderen Ausgestaltung der Erfindung jedoch wird die Codierungs-Erfassungseinrichtung nur dann aktiviert, wenn ein Einschalter des Handteils, beispielsweise des elektrischen Antriebes, betätigt wird. Diese Maßnahme hat den Vorteil, daß der Stromverbrauch der Codierungs-Erfassungseinrichtung minimiert ist. Zum Einschalten der Zahnputzvorrichtung wird vom Benutzer der Schalter zum Ein- oder Ausschalten der Steuereinrichtung bzw. des Elektromotors wie gewohnt betätigt. Allerdings wird durch Betätigen des Schalters nicht unmittelbar der Elektromotor bzw. Antrieb in Gang gesetzt, sondern zunächst die Codierungs-Erfassungseinrichtung aktiviert, die dann, sofern eine kompatible bzw. passend codierte Aufsteckbürste mit dem Handteil gekuppelt ist, den Motor des Handteils in Betrieb setzt. Letztendlich wird also durch eine Aktivierung der Codierungs-Erfassungseinrichtung mittels des Ein-/Ausschalters der Antrieb des Handteils lediglich mittelbar in Betrieb gesetzt, nämlich dann, wenn das Freischaltorgan des Bürstenteils die Betriebssperrvorrichtung des Handteils deaktiviert. Ist kein Bürstenteil dem Handstück aufgesteckt bzw. mit diesem gekuppelt oder befindet sich ein nicht kompatibles Bürstenteil an dem Handstück, so wird die Codierungs-Erfassungseinrichtung nach Betätigen des Ein-/Ausschalters des Handteils nicht eine passende Codierung erfassen bzw. wird das nicht an der Aufsteckbürste vorhandene Freischaltorgan die Betriebssperrvorrichtung des Handteils nicht deaktivieren können, so daß in diesem Fall das Handstück der elektromotorisch angetriebenen Zahnbürste nicht in Betrieb gesetzt werden kann. Unter anderem hat diese Maßnahme der Aktivierung der Codierungs-Erfassungseinrichtung mittels des Ein-/Ausschalters den Vorteil, daß die Codierungs-Erfassungseinrichtung bevorzugt nur beim Ein-/Ausschaltvorgang des Schalters des Handteils mit Strom versorgt werden muß und ansonsten jedoch inaktiv oder passiv ist. Natürlich kann auch während des Betriebes der Zahnbürste in regelmäßigen oder unregelmäßigen Intervallen die Codierungs-Erfassungseinrichtung aktiviert werden, um auch außerhalb des Ein-/Ausschaltvorganges teils das Vorhandensein einer kompatiblen, d. h. richtig codierten Aufsteckbürste zu überprüfen. Wird am Ende des Zahnputzvorganges der Ein-/Ausschalter erneut betätigt, um den Antrieb des Handteils auszuschalten, wird durch diese Betätigung der Antrieb unmittelbar gestoppt und gegebenenfalls die Betriebssperrvorrichtung deaktiviert, so daß sich bei einem anschließenden Wiedereinschalten des Ein-/Ausschalters des Handteils der beschriebene Vorgang wiederholen kann.

Die Erfassung der unmittelbar an den Putzwerkzeugen vorgesehenen Codierungen bzw. der Signale des Freischaltorgans sowie die Codierungen bzw. Ausbildung des Freischaltorgans der Putzwerkzeuge kann in verschiedener Weise erfolgen.

Dabei ist die Codierungs-Erfassungseinrichtung berührungslos arbeitend ausgebildet. Hierdurch wird der Vorteil erreicht, daß Störungen durch Verschmutzung von Kontaktflächen oder Verschleiß durch häufiges Aufstecken und Abnehmen vermieden wird.

Insbesondere kann das Handteil einen Signalempfänger zum Empfang eines die Betriebssperre freischaltenden Signals von dem Putzwerkzeug aufweisen. Die Abgabe des codierten Signals bzw. Freischaltsignals von dem Putzwerkzeug kann durch einen passenden Geber, beispielsweise einen Magneten oder dergleichen erfolgen.

Die Codierung bzw. Ausbildung des Freischaltorgans der Putzwerkzeuge sowie die entsprechende Erfassung dieser Codierungen bzw. des Freischaltorgans können auf weiter verschiedene Art und Weise bewerkstelligt werden. Gemäß einer bevorzugten Ausführung der Erfindung wird mittels einer magnetischen Erfassungs-Einrichtung eine magnetische Codierung bzw. ein magnetisch wirksames Freischaltorgans des jeweils auf das Handteil aufgesetzten Putzwerkzeuges erfaßt. Die magnetische Codierung bzw. Ausbildung des Freischaltorgans des oder der Putzwerkzeuge kann dadurch erfolgen, daß in das Putzwerkzeug selbst oder in einen Abschnitt oder Teil des Putzwerkzeugs, beispielsweise einen Farbring oder Profilring, wie er beispielsweise in der WO 99/20202 dargestellt ist, die durch ausdrücklichen Verweis in den Offenbarungsgehalt der vorliegenden Anmeldung aufgenommen wird, eine einheitliche oder gegebenenfalls individuell verschiedene Anzahl von magnetischen Partikeln oder ein bevorzugt kleiner Magnet, z. B. Stabmagnet oder sonstiger Permanentmagnet eingebracht ist. Auch die Erfassungs-Einrichtung zur Erfassung des Magneten bzw. des Magnetfeldes des Putzwerkzeuges kann verschieden ausgebildet sein. Gemäß einer bevorzugten Ausführung der Erfindung weist das Handteil, bevorzugt im oberen Abschnitt des Kupplungsbereiches mit dem aufsteckbaren Reinigungswerkzeug, einen Hall-Sensor auf, der ein der magnetischen Codierung bzw. ein des einen einheitlichen Magneten des Freischaltorgans des jeweiligen Putzwerkzeugs entsprechendes elektrisches Signal bereitstellt. Gemäß einer weiteren bevorzugten Ausführung der Erfindung kann in dem Handteil ein LC-Oszillator vorgesehen sein, der durch die magnetische Codierung bzw. den Magneten des jeweils aufgesetzten Putzwerkzeugs verstimmt wird und somit verschiedene, den jeweiligen Benutzern zuordenbare Frequenzen liefert bzw. zur Freischaltung der Betriebssperre des Handteils dient.

Eine weitere vorteilhafte Ausführung der Erfindung liegt darin, daß an dem Handteil mehrere Reed-Kontakte vorgesehen sind, die beim Aufstecken der Putzwerkzeuge auf das Handteil insbesondere individuell betätigt werden. Je nach Kombination der betätigten Kontakte kann ein Freischaltsignal erzeugt werden oder nicht.

Das Putzwerkzeug zeichnet sich also dadurch aus, daß eine magnetische oder elektromagnetische Codiereinrichtung bzw. ein derartiges Freischaltorgan vorgesehen ist.

Vorzugsweise ist die Codiereinrichtung bzw. das Freischaltorgan als separates Bauteil ausgebildet und kann von dem restlichen Teil des Putzwerkzeugs abgenommen bzw. ausgetauscht werden. Hierdurch wird der Vorteil erreicht, daß das Putzwerkzeug an sich nur in einer Form gefertigt werden muß. Durch Anbringen der separaten Codiereinrichtung werden die Putzwerkzeuge individuell codiert und können einem Handteil bestimmten Typs zugeordnet werden. Jedoch kann die Codiereinrichtung auch in dem Putzwerkzeug integriert sein.

Vorzugsweise ist die Codiereinrichtung im Bereich der Verbindung bzw. Kupplung des Putzwerkzeugs zu dem Handteil angeordnet. Hierdurch wird das Lesen der Codierung bzw. Erfassen des Freischaltorgans durch die Erkennungs-Einrichtung an dem Handteil erleichtert. Insbesondere kann die Codiereinrichtung in einen Ring integriert sein, der an der handteilseitigen Stirnseite des Putzwerkzeugs angeordnet, insbesondere formschlüssig aufgeschnappt sein kann. Die verschiedenen Ausbildungen der Erkennungs-Einrichtungen können jeweils für sich allein oder auch in Kombination miteinander vorgesehen sein. Selbiges gilt für die verschiedenen Ausbildungen der Codiereinrichtung an dem Putzwerkzeug.

Neben dem Schutz des Handteils vor unbeabsichtigtem Einschalten und unsachgemäßer Verwendung nicht kompatibler Putzwerkzeuge kann eine Codierung der Putzwerkzeuge und deren Erfassung durch das Handteil vorteilhafterweise zur Realisierung weiterer Funktionen ausgenutzt werden. In Weiterbildung der Erfindung kann vorgesehen sein, daß das Handteil in Abhängigkeit des jeweils erfaßten Putzwerkzeugs eine oder vorzugsweise mehrere Funktionen der Zahnputzvorrichtung steuert. Insbesondere kann die Steuereinrichtung des Handteils, unter der Annahme, daß jeder Benutzer des Handteils ein eigenes Putzwerkzeug benutzt, anhand der erfaßten Putzwerkzeugcodierung selbsttätig feststellen, welcher der Benutzer die Zahnputzvorrichtung gerade benutzt. Es ist keine Eingabe seitens des Benutzers wie zum Beispiel ein Knopfdruck und dergleichen notwendig, um der Zahnputzvorrichtung mitzuteilen, wer sie benutzt. Es kann eine automatische Anpassung an den jeweiligen Benutzer erfolgen. Hierdurch wird ein Höchstmaß an Benutzerfreundlichkeit erzielt.

Insbesondere können in Weiterbildung der Erfindung mittels der Steuereinrichtung Betriebsparameter wie Putzfrequenz, -geschwindigkeit und -zeit bzw. Anpreßdruckschwellwert oder - sollwertbereich automatisch an den jeweils erfaßten Benutzer angepaßt werden. Es können verschiedene Benutzerprofile eingestellt und abgespeichert werden, von denen eines von der Steuervorrichtung zur Anwendung gebracht wird, nachdem zu Beginn des Putzvorgangs die Codierung des gerade verwendeten Putzwerkzeugs erfaßt und damit der jeweilige Benutzer bestimmt worden ist. Die Codierungs-Erkennungseinrichtung hat hierzu ein entsprechendes Signal an die Steuereinrichtung gegeben. Bei elektrischen Zahnbürsten kann die Motordrehzahl beispielsweise bei einem Kind als Benutzer gegenüber der sonst für Erwachsene üblichen Drehzahl reduziert werden, so daß für das Kind eine schonendere Zahnreinigung durchgeführt wird. Die Steuervorrichtung kann ferner in Abhängigkeit eines Signals der Codierungs-Erfassungseinrichtung die Zeitdauer eines Timers je nach dem erfaßten Benutzer variieren, beispielsweise bei Kindern auf zwei Minuten und bei Erwachsenen auf drei Minuten einstellen. Auch könnte die Art der Signalgebung des Timers modifiziert werden und beispielsweise bei Kindern als Melodie und bei Erwachsenen als Summton eingestellt werden.

In Weiterbildung der Erfindung können auch benutzerspezifische Daten wie Putzfrequenz, - geschwindigkeit, -zeit, Zeitspanne zwischen Putzvorgängen, oder Anpreßdruck automatisch in Abhängigkeit eines entsprechenden Signals der Erkennungseinrichtung benutzerspezifisch gespeichert, verarbeitet und beispielsweise an einem Display angezeigt werden. Auch hierdurch wird ein erhöhter Bedienungskomfort erreicht.

Der jeweilige Benutzer wird also mittelbar anhand des verwendeten Putzwerkzeugs bzw. dessen Codierung von dem Handteil erfaßt bzw. bestimmt. Jedem Benutzer ist sein eigenes Putzwerkzeug fest zugeordnet. Hierzu können die Putzwerkzeuge, die ansonsten identisch ausgebildet sein können, benutzerspezifische Codierungsmittel aufweisen.

Es kann auch eine spezifische Funktionssteuerung in Abhängigkeit des verwendeten Putzwerkzeugtyps vorgesehen sein. Z. B. können Betriebsparameter des Handteils automatisch verändert werden, wenn eine Aufsteckbürste mit bestimmten Eigenschaften wie große Härte oder geringe Härte verwendet wird. Ebenso kann ein anderes Betriebsprogramm aufgerufen werden, wenn ein Putzwerkzeug eines anderen Typs wie z.B. Interdentalreiniger, Zahnfleischmassierer oder Zungenschaber auf das Handteil aufgesetzt ist. Je nach individuellem und/oder personenbezogenem, austauschbarem Reinigungswerkzeug können die Drehzahl, Sollputzzeitdauer, Antriebsbewegung, Putzfrequenz, -geschwindigkeit, Anpreßdruckschwellenwert etc. angepaßt werden.

Ferner kann durch das unverwechselbare Erkennen eines individuellen Reinigungs- oder Putzwerkzeuges bzw. Refills präzise dessen Abnutzung bestimmt werden, z.B durch Auswerten der zeitlichen Vergangenheit dieses Putzwerkzeugs, insbesondere der Benutzungszeit. Bei Putzwerkzeugen mit chemischen Zusatzstoffen kann durch den in der Codierung versteckten Herstellzeitpunkt deren Verfallszeit erkannt werden. Vorgegeben Reinigungs-oder Wartungsintervalle können angezeigt werden.

Zusammenfassend soll der Kern vorliegender Erfindung, auch unabhängig von der Formulierung in den Ansprüchen, dargestellt werden: Das Freischaltorgan am Putzwerkzeug für die Freischaltung der Betriebssperrvorrichtung kann derart gestaltet sein, daß lediglich die Anwesenheit bzw. Nichtanwesenheit einer Ersatzbürste am Handteil detektiert werden kann. Hierzu kann beispielsweise in der Bürste ein Geber angeordnet sein, der mit einem im Handteil angeordneten Nehmer derart korrespondiert, daß im gekuppelten Zustand von Putzwerkzeug und Handteil der Nehmer von dem Geber ein Signal erhält und beispielsweise die vorgesehene Betriebssperrvorrichtung deaktiviert, so daß das Handteil und damit auch das Putzwerkzeug mittels des Antriebes in Gang gesetzt werden können. Durch diese Maßnahme wird eine konstruktiv einfache sogenannte Reisesicherung für das Handteil geschaffen, welches bei Einsatz der geschilderten Maßnahmen ohne angekuppeltes Putzwerkzeug mit Geber nicht in Betrieb gesetzt werden kann. Demnach ist es ausreichend, zur Aktivierung der Reisesicherung das Putzwerkzeug und Handteil voneinander zu entkuppeln. Weitere Maßnahmen zur Blockierung beispielsweise des Ein- oder Ausschalters des Handteils oder sonstige Mittel sind nicht erforderlich. Im übrigen hilft auch die Anordnung eines solchen Gebers im Putzwerkzeug, der im angekuppelten Zustand mit einem Nehmer des Handteils korrespondiert bzw. kommuniziert, daß der Betrieb des Handteils mit nicht kompatiblen Putzwerkzeugen unterbunden werden kann, da solche inkompatiblen Putzwerkzeuge herstellerseitig nicht mit einem entsprechenden Geber, der fähig wäre, mit dem Nehmer des Handteils zu kommmunizieren, ausgestattet sind.

Für Ausnahmesituationen kann es auch vorgesehen sein, den normalerweise im Putzwerkzeug vorgesehenen Geber, beispielsweise Magnet oder dergleichen bzw. die Codierungseinrichtung als separat handhabbares Teil dem Endverbraucher isoliert zur Verfügung zu stellen bzw. am Handstück selbst vorzusehen. Diese Vorgehensweise bietet sich beispielsweise dann an, wenn der Endbenutzer bereits ein Handstück mit einer Betriebssperrvorrichtung besitzt, jedoch noch eine Anzahl an Putz- oder Reinigungswerkzeugen im Haushalt als Vorrat hat, die mit einem Freischaltorgan bzw. einem Geber zum Freischalten der Betriebssperre des Handteils oder Handstücks nicht ausgerüstet sind. Um zu gewährleisten, daß diese in der Regel älteren Ersatz-Reinigungswerkzeuge, welche an und für sich mechanisch kompatibel mit dem neueren Handstück sind, jedoch ein Freischaltorgan, welches mit der in dem Handstück vorgesehenen Betriebssperrvorrichtung kommunizieren und diese freischalten könnte, noch nicht aufweisen, dennoch verwenden zu können, kann es sich daher anbieten, das Freischaltorgan bzw. den Geber dem Endverbraucher als eigenständig handhabbares Bauteil zur Verfügung zu stellen bzw. für das Freischaltorgan in diesen Ausnahmefällen am Handstück eine Befestigungsvorrichtung vorzusehen. So kann beispielsweise von dem Endbenutzer dieses Freischaltorgan bzw. der Geber direkt an dem Handteil bzw. Handstück mit der Betriebssperrvorrichtung, beispielsweise an der Gehäuseaußenseite im Bereich des Nehmers des Handteils befestigt werden und für derartige Sonder- oder Ausnahmefälle die Betriebssperrvorrichtung des Handteils durch Anordnung des Gebers am Handteil selbst und nicht an dem Reinigungswerkzeug sozusagen außer Betrieb gesetzt werden. Infolgedessen kann das Handstück auch mit Reinigungswerkzeugen, die an und für sich mechanisch kompatibel sind, betrieben werden, die selbst ein Freischaltorgan bzw. einen mit der Betriebssperrvorrichtung kommunizierenden Geber noch nicht aufweisen. Diese Maßnahme kann auch dann vorgesehen werden, wenn beispielsweise aus Kostengründen nicht sämtliche Ersatz-Reinigungswerkzeuge, welche kompatibel oder mechanisch passend mit dem Handteil bzw. Handstück sind, mit einem solchen Freischaltorgan, einer Codiervorrichtung oder einem Geber ausgestattet werden sollen. Es versteht sich, daß diese Maßnahme der unmittelbaren Anbringung des Freischaltorgans an dem Handteil, beispielsweise durch den Benutzer, eine Ausnahmesituation darstellt und im Regelfall das Freischaltorgan am Bürstenteil oder Reinigungsteil anzuordnen ist. Insbesondere für den Fall, daß das Freischaltorgan ein magnetischer Geber ist, dem ein auf Magnetfelder ansprechender Nehmer im Handstück bzw. Handteil zugeordnet ist, kann es sich insoweit auch anbieten, für diesen Ausnahmefall die Antriebswelle des Handteils, welche in der Regel in der Nähe des Nehmers zur Freischaltung der Betriebssperrvorrichtung des Handteils angeordnet ist, zu mag-netisieren oder einen Magnetklebestreifen oder dergleichen zur Verfügung zu stellen, der dem Handteil an passender Stelle im Bereich des Nehmers aufgeklebt werden kann. Auch durch diese Maßnahme kann die Betriebssperrvorrichtung außer Kraft gesetzt und das Handteil bzw. Handstück mit kompatiblen, ein Freischaltorgan nicht aufweisenden Reinigungswerkzeugen betrieben werden.

Weiterhin kann die Codierungs-Erfassungseinrichtung auch derart ausgebildet sein, daß die Ankupplung eines Putzwerkzeuges mit einigen wenigen Unterscheidungsmöglichkeiten von Putzwerkzeugen möglich ist. Es lassen sich mit einer modifizierten Codierungs-Erfassungseinrichtung, die beispielsweise zwei, vier oder sechs unterschiedliche Codierungen des Putzwerkzeuges zu erkennen erlaubt, neben der Reisesicherung weitere Funktionen realisieren. So kann beispielsweise dann von dem Handteil erkannt werden, ob eine Erwachsenen-Zahnbürste (harte Borsten) oder eine Kinder-Zahnbürste (weiche Borsten) mit dem Handteil gekuppelt sind, ein Interdentalreiniger anstelle einer Zahnbürste verwendet wird oder auch andere Parameter unterschieden werden. Gegebenenfalls kann über die jeweilig erkannte Codierung eine individuelle Ansteuerung der Steuereinrichtung für den Antrieb durchgeführt werden, so z. B. eine Steuerung der Geschwindigkeit des Antriebes, beispielsweise der Drehzahl oder auch der Sollputzzeitdauer oder dergleichen. In diesem Fall des Vorsehens einer Codierung bzw. Codierungs-Erfassungs-einrichtung mit wenigen (zwischen ca. zwei und ca. zehn) Unterscheidungsmöglichkeiten besteht jedoch noch nicht die Möglichkeit, ein individuelles Putzwerkzeug aus einer Millionenzahl von vom Hersteller in den Handel gebrachten Putzwerkzeugen zu erkennen. Vielmehr ist es mit diesen begrenzten Unterscheidungsmöglichkeiten allenfalls möglich, einen speziellen Typ von Putzwerkzeug (Kinderzahnbürste, Erwachsenenzahnbürste, Interdentalzahnbürste, Flosser-Reinigungsgerät, jeweils als Aufsteckteil für das Handteil ausgebildet) zu erkennen bzw. einige personenbezogene Putz- oder Reinigungswerkzeuge zu unterscheiden.

Sofern mit der Codierungs-Erfassungseinrichtung jedes einzelne, individuelle vom Hersteller hergestellte Putzwerkzeug, welches mit dem Handteil als kompatibles Teil kuppelbar ist, erkannt werden soll, sind eine Vielzahl von Unterscheidungsmöglichkeiten im Bereich von ca. 10⁶ bis ca. 10¹² vorzusehen, wozu in aller Regel ein Transponder oder dergleichen elektronische Mittel Anwendung finden. In diesem Fall ist eine Erkennung eines individuellen, vom Hersteller gelieferten Putzwerkzeuges, welches mit dem Handteil gekoppelt ist, möglich. Hierdurch wird zusätzlich zu den bereits erwähnten Möglichkeiten bei einfacheren Codierungen die Voraussetzung dafür geschaffen, daß beispielsweise der Abnutzungsgrad des Putzwerkzeuges durch Auswertung der Vergangenheit genauer bestimmt werden kann. Bei Ersatzreinigungswerkzeugen mit chemischen Zusatzstoffen können durch den in der Codierung angegebenen Herstelltermin Verfallszeiten erkannt werden oder auch vorgegebene Reinigungs- oder Wartungsintervalle des Putzwerkzeuges angegeben bzw. eingehalten werden.

Unabhängig davon, wie einfach oder kompliziert die Codierung des Putzwerkzeuges sowie die Codierungs-Erfassungseinrichtung aufgebaut sind, kann mit jeder dieser Codierungen für die Realisierung einer Reisesicherung gesorgt werden, indem das insbesondere kompatible Putzwerkzeug von dem Handteil abgekuppelt wird und infolgedessen ein Inbetriebsetzen des Handteils nicht mehr möglich ist. Ebenso ist auch ein Inbetriebsetzen des Handteils bei jeder dieser Codierungen, ob einfach oder aufwendig ausgestaltet, vermieden, sofern das Putzwerkzeug eine Codierung bzw. ein Freischaltorgan überhaupt nicht aufweist. Wird ein solchermaßen nicht codiertes bzw. nicht mit einem Freischaltorgan vorgesehenes Putzwerkzeug mit dem Handteil gekoppelt, kann der im Handteil positionierte Nehmer, Empfänger oder dergleichen Mittel mit dem im nicht kompatiblen Putzwerkzeug nicht vorhandenen Geber, Sender oder dergleichen Mittel nicht in Kommunikation treten, so daß genauso wie im Falle eines kompatiblen, aber nicht mit dem Handteil gekuppelten Putzwerkzeuges das Vorhandensein dieses nicht kompatiblen Putzwerkzeuges am Handteil nicht erkannt wird und somit das Handteil aufgrund des fehlenden Freischaltorgans und der damit fehlenden möglichen Deaktivierung der Betriebssperrvorrichtung nicht in Betrieb gesetzt werden kann.

Ist hingegen ein kompatibles Putzwerkzeug mit dem Freischaltorgan bzw. der passenden Codierung dem Handteil angekoppelt, wird spätestens beim Betätigen des Ein-/Ausschalters des Handteils das Vorhandensein der richtigen Codierung bzw. des Freischaltorgans mittels einer Erfassungs-einrichtung im Handteil erkannt und die Betriebssperrvorrichtung deaktiviert sowie das Handteil in Gang gesetzt, so daß das Putzorgan, beispielsweise der Bürstenkopf des Putzwerkzeugs mittels des Antriebes des Handteils in Betrieb gesetzt wird.

Insoweit betrifft die Erfindung auch ein Verfahren zum Betreiben einer elektrischen Zahnreinigungs- oder Zahnputzvorrichtung bestehend aus einem Handteil und einem aufsteckbaren bzw. ankuppelbaren Reinigungswerkzeug, z. B. eine Aufsatzbürste oder dergleichen, wobei Handstück und Reinigungswerkzeug im gekuppelten Zustand miteinander kommunizieren bzw. Mittel im Handstück vorgesehen sind, die in der Lage sind, zu erfassen, ob einerseits ein Reinigungswerkzeug am Handstück angekuppelt ist und/oder ob es sich andererseits bei dem an das Handstück angekuppelte Reinigungswerkzeug um ein zum Handstück kompatibles Reinigungswerkzeug handelt. Ist ein Reinigungswerkzeug nicht an das Handstück angekuppelt, so wird diese Information dazu benutzt, ein Einschalten des elektrischen Antriebes des Handstückes beispielsweise mittels des am Handstück vorgesehenen Einschalters zu unterdrücken. Dies kann beispielsweise durch eine Betriebssperrvorrichtung im Handstück geschehen. Somit ist es nicht möglich, das Handstück ohne angekuppeltes bzw. aufgestecktes Reinigungswerkzeug in Betrieb zu setzen, wodurch eine komfortable Reise-Einschaltsicherung bereitgestellt wird. Weiterhin zeichnet sich das Verfahren auch dadurch aus, daß das Reinigungswerkzeug ein Freischaltorgan aufweist, welches einer im Handstück angeordneten Erfassungseinrichtung signalisiert, daß das Reinigungswerkzeug dem Handstück angekuppelt ist und die Betriebssperrvorrichtung deaktiviert bzw. freigeschaltet werden kann, so daß das Zahnreinigungsgerät durch Einschalten des elektrischen Antriebes in Gang gesetzt werden kann. Sofern jedoch das Reinigungswerkzeug ein derartiges Freischaltorgan nicht besitzt, kann selbst im gekuppelten Zustand von Reinigungswerkzeug und Handstück der Antrieb des Handstückes nicht in Gang gesetzt werden, da bei einem fehlenden Freischaltorgan an dem Reinigungswerkzeug davon ausgegangen werden muß, daß es sich um ein zum Handstück nicht kompatibles Reinigungswerkzeug handelt.

Weitere Ausgestaltungen des Verfahrens bestehen auch darin, die dem Handteil anzukuppelnden, verschiedenen Reinigungswerkzeuge personenbezogen, reinigungswerkzeugbezogen oder dergleichen zu codieren, so daß dem Handteil bzw. Handstück über eine entsprechende Erfassungseinrichtung der Codierung nicht nur das Ankuppeln bzw. Nichtankuppeln eines Reinigungswerkzeuges oder auch eines kompatiblen Reinigungswerkzeuges, sondern auch die Art des verwendeten Reinigungswerkzeuges bzw. die das Reinigungswerkzeug benutzende individuelle Person mitgeteilt werden kann, so daß entsprechende Parameter oder auch Betriebsparameter des Handstücks personen- und/oder reinigungswerkzeugbezogen eingestellt bzw. gespeichert werden können. Diese einzelnen Maßnahmen sind im Rahmen der Beschreibung der Vorrichtung im Detail erläutert und gehören auch als erfindungsbedeutsame Bestandteile zum vorliegenden Verfahren.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand vorliegender Erfindung, auch unabhängig von ihrer Zusammenfassung in den Ansprüchen oder deren Rückbeziehung.

Es zeigen:
- Figur 1: eine perspektivische Darstellung einer elektrischen Zahnbürste mit einem Handteil und einer auf diesen aufsteckbaren Aufsteckbürste,
- Figur 2: eine schematische Längsschnittansicht des Handteils der elektrischen Zahnbürste aus Figur 1, die dessen Gehäuse, den darin angeordneten Antriebsmotor mit Getriebe und Antriebswelle, den Akku für den Antriebsmotor sowie das Lademodul für den Akku zeigt,
- Figur 3: eine schematische Darstellung einer elektrischen Zahnbürste mit einer magnetischen Codierung der Aufsteckbürste sowie einem Hallsensor zur Erfassung der Codierung nach einer bevorzugten Ausführung der Erfindung,
- Figur 4: eine auschnittsweise Schnittansicht der Zahnbürste aus Figur 3, die die Anordnung des Hallsensors sowie der magnetischen Codierung der Aufsteckbürste zeigt, wobei letztere auf das Handteil gesteckt ist,
- Figur 5: eine schematische Darstellung einer elektrischen Zahnbürste mit einer magnetisch codierten Aufsteckbürste sowie einem LC-Oszillator in dem Handteil zur Erfassung der Codierung gemäß einer weiteren bevorzugten Ausführung der Erfindung,
- Figur 6: eine auschnittsweise Schnittansicht der Zahnbürste aus Figur 5, die die Anordnung des LC-Oszillators sowie der magnetischen Codierung der Aufsteckbürste zeigt, wobei letztere auf das Handteil gesteckt ist,
- Figur 7: eine schematische Darstellung einer elektrischen Zahnbürste mit einer magnetischen Codierung der Aufsteckbürste sowie einem Handteil mit Reedkontakten zur Erfassung der Codierung gemäß einer weiteren bevorzugten Ausführung der Erfindung,
- Figur 8: eine auschnittsweise Schnittansicht der Zahnbürste aus Figur 7, die die Anordnung der Reedkontakte sowie der magnetischen Codierung der Aufsteckbürste zeigt, wobei letztere auf das Handteil gesteckt ist.

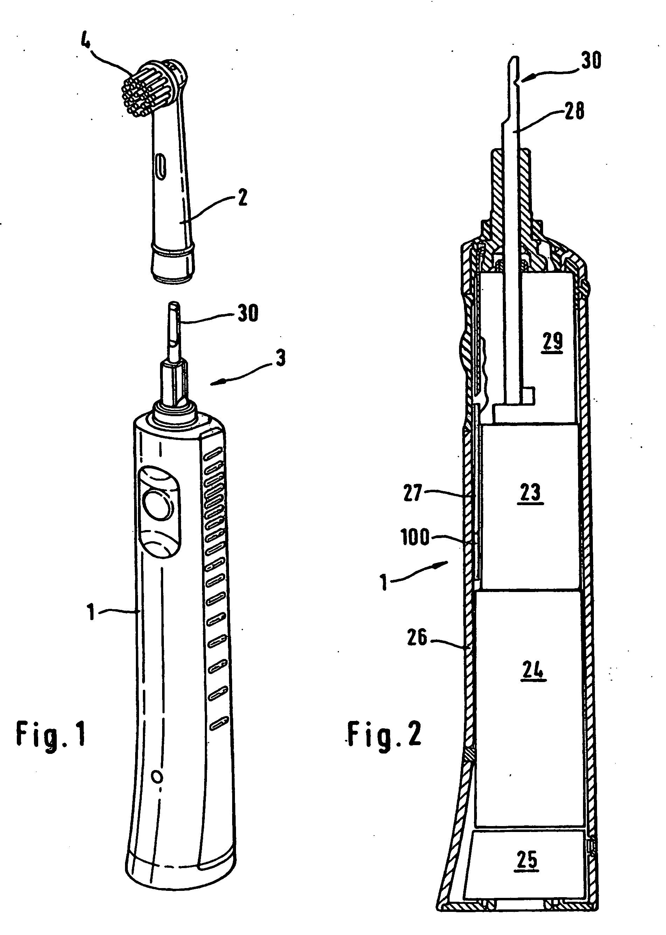

Die in den Figuren gezeigte elektrische Zahnbürste besitzt ein Handteil 1 mit einem geschlossenen Gehäuse 26, in dem unter anderem, wie in Figur 2 dargestellt, in an sich bekannter Weise ein Elektromotor 23, ein Akku 24, der über ein bodenseitig angeordnetes Lademodul 25 an eine Ladestation ankoppelbar ist, sowie eine Steuereinrichtung 27, die eine Leiterplatte bzw. einen Mikroprozessor besitzen kann, untergebracht sind. Auf das Handteil 1 sind als Putz- oder Reinigungswerkzeuge verschiedene Aufsteckbürsten 2 stirnseitig aufsetzbar. Mittels einer Kupplung 3 kann die Aufsteckbürste 2 mechanisch an das Handteil 1 angekuppelt werden, um die Antriebsbewegung des Elektromotors auf den Bürstenkopf 4 der Aufsteckbürste 2 zu übertragen. Die ein- oder mehrteilige bzw. -stückige Kupplung 3 umfaßt einerseits eine formschlüssige oder kraftschlüssige Festlegung des Putzwerkzeugkorpus an sich, sowie andererseits eine Antriebskupplung, die die Antriebsbewegung des Antriebs auf den Bürstenkopf 4 der Aufsteckbürste überträgt. Aus dem Handteil 1 ragt stirnseitig eine Antriebswelle 28, die vom Antriebsmotor 23 über ein Getriebe 29 in an sich ebenfalls bekannter Weise antreibbar ist. Die Antriebswelle 28 besitzt einen Kupplungsabschnitt 30, auf den eine in dem Putzwerkzeug 2 angeordnete Antriebswelle mit einem komplementären Kupplungsabschnitt formschlüssig oder kraft- oder reibschlüssig aufsetzbar ist, so daß die Antriebsbewegung übertragen und der Bürstenkopf 4 der Aufsteckbürste oszillierend, rotierend, schwingend etc. antreibbar ist.

Die Steuereinrichtung 27 weist in elektronischer Form eine Betriebssperrvorrichtung 100 auf, die den Antrieb des Handteils sperrt und nur bei Aufstecken einer kompatiblen Aufsteckbürste 2 auf das Handteil 1 den Betrieb des Antriebs freigibt. Der Schlüssel für diese elektronische Betriebssperrvorrichtung 100 ist eine an der Aufsteckbürste 2 vorgesehene Codierung bzw. ein Freischaltorgan 7.

Um die jeweils aufgesteckte Aufsteckbürste 2 zu erkennen, ist am Handteil 1 eine Codierungs-Erfassungseinrichtung 5 bzw. eine Vorrichtung zur Erfassung des Vorhandenseins des Freischaltorgans 7 vorgesehen. In Abhängigkeit eines Signals dieser Vorrichtung bzw. Codierungs-Erfassungseinrichtung 5 schaltet die Steuereinrichtung 27 den Antrieb frei oder auch nicht.

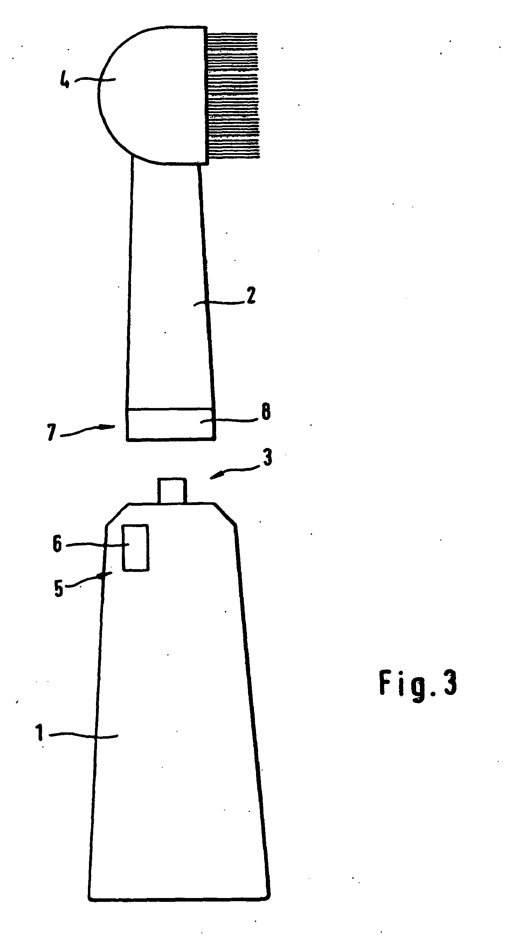

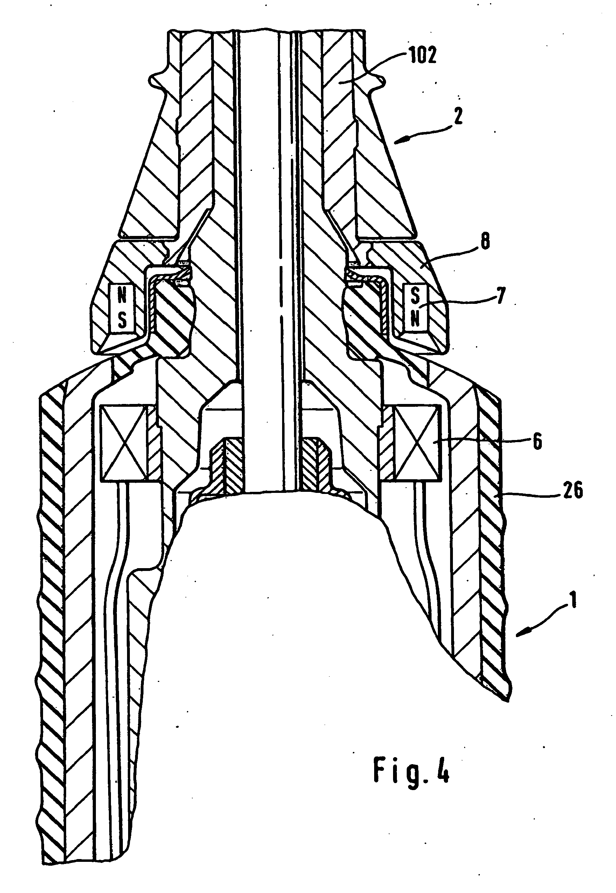

Gemäß Figur 3 ist ein Hallsensor 6 am kupplungsseitigen Ende des Handteils 1 angeordnet, um eine magnetische Codierung 7 der Aufsteckbürste 2 zu lesen bzw. zu erkennen. Die magnetische Codierung 7 wird von einem Aufsteckring 8 bzw. einem Profilring 102 nach der WO 99/20202 gebildet, der an dem kupplungsseitigen Ende der Aufsteckbürste 2 an dieser angebracht ist. Der Aufsteckring 8 ist in verschiedenen Farben verfügbar und enthält entweder Permanentmagnete bzw. gleiche Magnetkörper oder je nach Farbe eine unterschiedliche Anzahl von magnetischen Partikeln bzw. Magnetkörper in unterschiedlicher Anzahl, magnetischer Orientierung und/oder magnetischer Feldstärke. Wie Figur 4 zeigt, kann der Aufsteckring 8 oder Profilring 102 vorteilhafterweise formschlüssig am Aufsteckbürstenkorpus festgelegt, insbesondere auf diesen aufgeschnappt werden. Die Verbindung kann dabei derart ausgebildet sein, daß der Ring 8 oder Profilring 102 in nur einer festgelegten Ausrichtung zum Aufsteckbürstenkorpus an diesem befestigbar ist. Der Hallsensor 6 im Handteil 1 liefert ein mit dem Magnetkörper oder der Anzahl der magnetischen Partikel bzw. der Anordnung der Magnetkörper korrelierendes Signal, dessen Wert insbesondere die jeweilige Aufsteckbürste 2 kennzeichnet und von der Steuereinrichtung in dem Handteil 1 weiterverarbeitet werden kann. Die Zuordnung der jeweiligen Aufsteckbürste 2 zu dem entsprechenden Benutzer kann durch die Farbe des Aufsteckrings 8 einfach merkbar vorgenommen werden.

Wie Figur 4 zeigt, sind die magnetische Codierung 7 und der Hallsensor 6 jeweils im Bereich der kupplungsseitigen Stirnseiten der Aufsteckbürste bzw. des Handteils angeordnet, und zwar vorteilhafterweise einander gegenüberliegend, um eine präzise Erfassung zu ermöglichen.

Die elektrischen Zahnbürsten gemäß den weiteren Ausführungsformen nach den weiteren Figuren besitzen grundsätzlich denselben Aufbau wie die in Figur 1 und 2 gezeigte Zahnbürste, so daß für entsprechende Bauteile dieselben Bezugsziffern vergeben sind und nachfolgend nur die unterschiedlichen Ausführungen der Codierungen 7 der Aufsteckbürsten 2 und der entsprechenden Codierungs-Erfassungseinrichtungen 5 am Handteil 1 beschrieben werden.

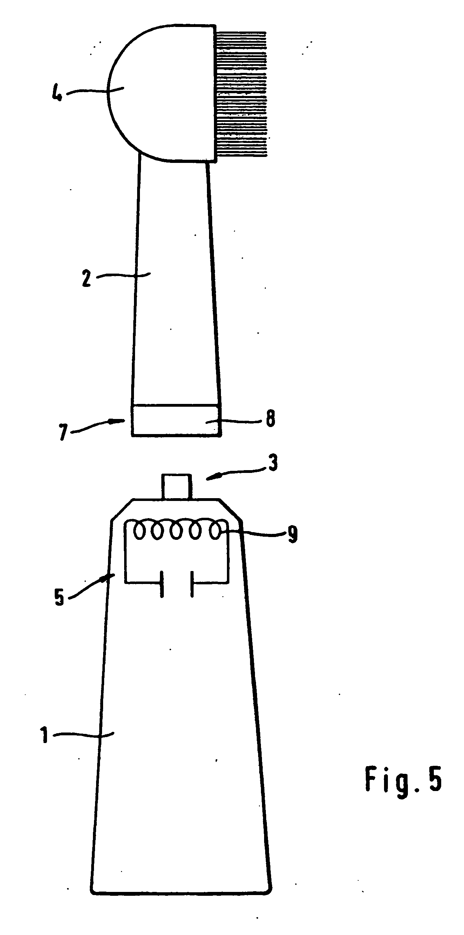

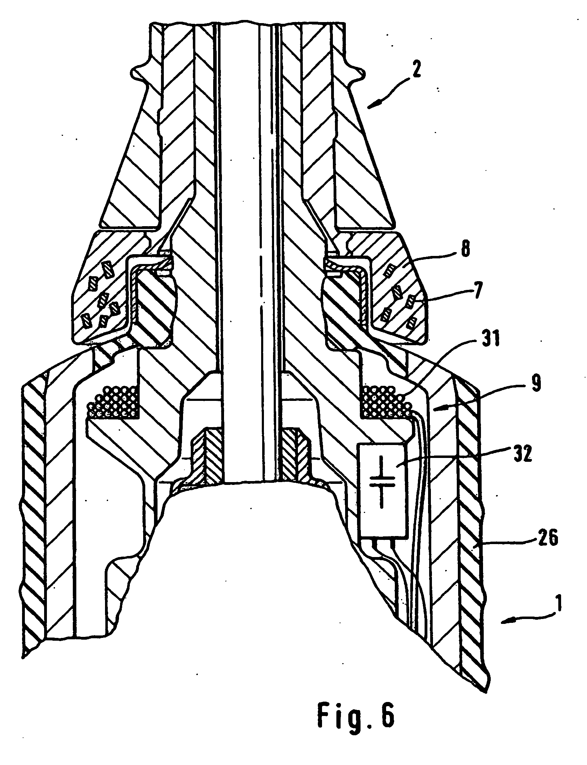

Bei der in Figur 5 und 6 gezeigten elektrischen Zahnbürste ist die Aufsteckbürste 2 ebenfalls mit einem Aufsteckring 8 versehen, welcher in unterschiedlichen Farben verfügbar ist und je nach Farbe eine unterschiedliche Anzahl von magnetischen Partikeln enthält. Die Erkennungs-Einrichtung 5 besitzt zur Erfassung der magnetischen Codierung der Aufsteckbürste 2 einen LC-Oszillator 9, der im Handteil 1 an dessen kupplungsseitigem Ende angeordnet ist und durch das magnetische Material in der Aufsteckbürste 2 verstimmt wird und hierdurch verschiedene, den Aufsteckbürsten zuordenbare Frequenzen liefert. Die entsprechenden Frequenzsignale werden von der Steuereinrichtung im Handteil 1 weiter verarbeitet, um die Freischaltung der Betriebssperrvorrichtung 100 zu bewirken oder auch weitere Betriebsparameter einzustellen bzw. benutzerspezifische Daten zu verarbeiten und anzuzeigen.

Wie Figur 6 zeigt, besitzt der LC-Oszillator eine Spule 31 sowie einen Kondensator 32, die beide im kupplungsseitigen Endbereich des Handteils liegen. Die Spule ist unmittelbar stirnseitig angeordnet. Sie kann an einem Absatz oder dergleichen eines Handteilchassis gelagert sein. Der Kondensator liegt unterhalb der Spule, die gegenüber dem Codierungsring 8 angeordnet ist. Hierdurch ist eine Erfassung der Codierung mit großer Genauigkeit möglich.

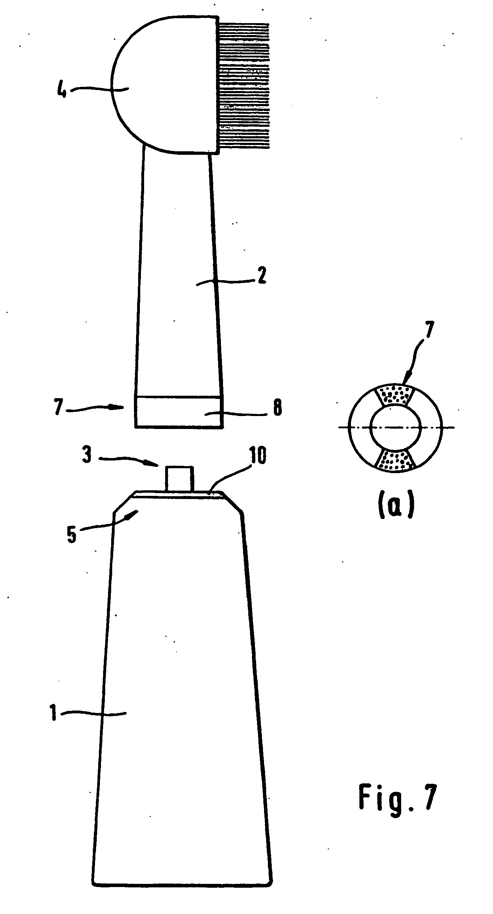

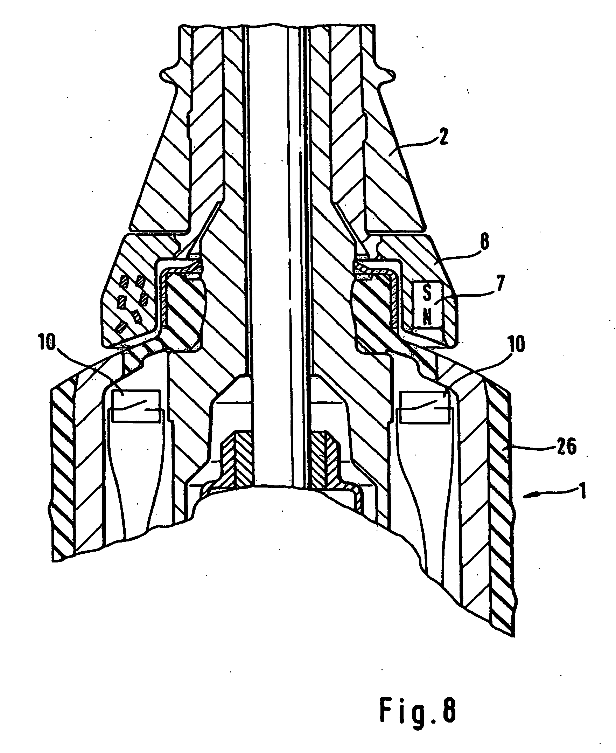

Figuren 7 und 8 zeigen eine weitere Ausführung einer elektrischen Zahnbürste, bei der der Aufsteckring 8 der Aufsteckbürste 2 entlang seines Umfangs nur an bestimmten Stellen mit magnetischen Material versehen ist (vgl. Figur 7a). Die Erkennungs-Einrichtung 5 umfaßt Reed-Kontakte 10 (vgl. Fig. 8), die an dem Handteil 1 an dessen an der Kupplung 3 liegenden Stirnseite angeordnet sind. Beim Aufstecken der Aufsteckbürste 2 auf das Handteil 1 werden die Reed-Kontakte 10 entsprechend der magnetischen Codierung des Aufsteckrings 8 definiert betätigt. Je nach Kombination der betätigten Kontakte kann eine bestimmte Aufsteckbürste identifiziert werden. Der Aufsteckring 8 ist auch hier als Farbring ausgebildet, um die Zuordnung zu einem Benutzer zu erleichtern. Um das Ansprechen der Reedkontakte zu verbessern, sind der magnetische Ring 8 bzw. Profilring 102 sowie die Reedkontakte 10 jeweils stirnseitig und einander gegenüberliegend angeordnet.

## Patentansprüche

1. Handteil (1) einer elektrischen Zahnreinigungs- oder Zahnputzvorrichtung (1, 2), mit einem Kupplungsteil zur Ankupplung eines Putz- oder Reinigungswerkzeugs (2), insbesondere Aufsatzbürste, mit einem Antrieb (23) zum Antreiben des angekuppelten Putz- oder Reinigungswerkzeugs sowie mit einer Steuereinrichtung (27) zur Steuerung des Antriebs, wobei die Steuereinrichtung (27) eine berührungslos arbeitende Betriebssperrvorrichtung (100) aufweist, die von einem als Magnetfeldgeber ausgebildeten Freischaltorgan (7) freischaltbar ist, wobei die Betriebssperrvorrichtung (100) von dem Freischaltorgan (7) dann freischaltbar ist bzw. frei geschaltet wird, wenn das Putzwerkzeug an dem Handteil angekuppelt ist wobei die Steuereinrichtung (27) eine Codierungs-Erfassungseinrichtung (5) zur Erfassung einer Codierung des Freischaltorgans (7) des angekuppelten Putzwerkzeugs (2) aufweist **dadurch gekennzeichnet, dass** abhängig von der erfassten Codierung des Putzwerkzeuges (2) wenigstens eines der Betriebsparameter Putzgeschwindigkeit, Putzfrequenz, Drehzahl, Sollputzzeitdauer, Antriebsbewegung und/oder Anpressdruckschwellwert anpassbar ist.

2. Handteil nach Anspruch 1, **dadurch gekennzeichnet, dass** das Handteil (1) in Abhängigkeit des jeweils erfassten Putzwerkzeugtyps (2) eine von mehreren spezifische Funktionen bzw. Betriebsparameter auswählt und steuert.

3. Handteil nach einem der vorhergehenden Ansprüche, **dadurch gekennzeichnet, dass** die Betriebssperrvorrichtung (100) in Abhängigkeit eines Signals der Codierungs-Erfassungseinrichtung (5) freischaltbar ist.

4. Handteil nach einem der vorhergehenden Ansprüche, wobei ein Schalter des Handteils (1), bevorzugt ein Ein-/Ausschalter des Antriebs (23), zur Aktivierung der Codierungs-Erfassungseinrichtung (5) vorgesehen ist, wobei der Antrieb (23) nach positivem Ansprechen der Codierungs-Erfassungseinrichtung (5) bzw, nach Deaktivierung der Betriebssperrvorrichtung (100) einschaltbar ist.

5. Handteil nach einem der vorhergehenden Ansprüche, **dadurch gekennzeichnet, dass** die Betriebssperrvorrichtung (100) elektronisch ausgebildet ist.

6. Handteil nach einem der vorhergehenden Ansprüche, **dadurch gekennzeichnet, dass** die Codierungs-Erfassungseinrichtung (5) berührungslos arbeitend ausgebildet ist.

7. Handteil nach einem der vorhergehenden Ansprüche, **dadurch gekennzeichnet, dass** die Codierungs-Erfassungseinrichtung (5) einen Signalempfänger (20) zum Empfang eines Codiersignals von dem Putzwerkzeug (2), insbesondere dem Freischaltorgan (7), aufweist.

8. Handteil nach einem der vorhergehenden Ansprüche, **dadurch gekennzeichnet, dass** die Codierungs-Erfassungseinrichtung (5) eine magnetische Erfassungseinrichtung (6; 9; 10) zur Erfassung einer magnetischen Codierung des jeweils angekuppelten Putzwerkzeugs (2), insbesondere des Freischaltorgans (7), aufweist.

9. Handteil nach einem der vorhergehenden Ansprüche, **dadurch gekennzeichnet, dass** die Codierungs-Erfassungseinrichtung (5) eine Erfassungseinrichtung (9), insbesondere ein Schaltkreis oder dergleichen, zur Erfassung einer magnetischen und/oder elektromagnetischen Codierung des jeweils angekuppelten Putzwerkzeugs (2), insbesondere des Freischaltorgans (7), aufweist.

10. Handteil nach einem der vorhergehenden Ansprüche, **dadurch gekennzeichnet, dass** die Steuereinrichtung ein Hallelement oder einen LC-Oszillator aufweist.

11. Handteil nach einem der vorhergehenden Ansprüche, **dadurch gekennzeichnet, dass** die Codierungs-Erfassungseinrichtung (5) in einem geschlossen, insbesondere fluiddichten Handteilgehäuse (26) angeordnet ist.

12. Handteil nach einem der vorhergehenden Ansprüche, **dadurch gekennzeichnet, dass** das Freischaltorgan (7) zur Freischaltung einer Betriebssperrvorrichtung (100) des Handteils (1) dem Handteil selbst zugeordnet ist und eine Antriebswelle (28) des Handteils (1), beispielsweise durch Magnetisierung, als Freischaltorgan (7) ausgebildet ist.

13. Handteil nach einem der vorhergehenden Ansprüche, **dadurch gekennzeichnet, dass** die Codierungs-Erfassungseinrichtung im Bereich der Verbindung bzw. Kupplung des Putzwerkzeuges zu dem Handteil angeordnet.

14. Handteil nach einem der vorhergehenden Ansprüche, **dadurch gekennzeichnet, dass** abhängig von der erfassten Codierung des Putzwerkzeuges (2) Betriebsparameter des Handteils (1) automatisch veränderbar sind.

15. Handteil nach einem der vorhergehenden Ansprüche, **dadurch gekennzeichnet, dass** abhängig von der erfassten Codierung des Putzwerkzeuges (2) eine individuelle Ansteuerung der Steuereinrichtung für den Antrieb des Handteils vorgesehen ist.

16. Handteil nach einem der vorhergehenden Ansprüche, **dadurch gekennzeichnet, dass** abhängig von der erfassten Codierung zwei bis zehn Putzwerkzeugtypen (2) am Handteil unterscheidbar sind.

17. Putz- oder Reinigungswerkzeug, insbesondere Aufsatzbürste, mit einem Kupplungsteil zum Ankuppeln an ein Handteil (1) einer elektrischen Zahnputzvorrichtung, wobei ein als Magnetfeldgeber ausgebildetes Freischaltorgan (7) zur berührungslosen Freischaltung einer Betriebssperrvorrichtung (100) des Handteils (1) vorgesehen ist, wobei das Freischaltorgan (7) eine Codiereinrichtung aufweist, die als Geber ausgebildet ist, die eine magnetische oder elektromagnetische Codierungsfunktion besitzen **dadurch gekennzeichnet, dass** die Codiereinrichtung derart ausgebildet und/oder angeordnet ist, dass wenigstens eines der Betriebsparameter Putzgeschwindigkeit, Putzfrequenz, Drehzahl, Sollputzzeitdauer, Antriebsbewegung und/oder Anpressdruckschwellwert anpassbar ist.

18. Putzwerkzeug nach Anspruch 17, **dadurch gekennzeichnet, dass** die Codiereinrichtung putzwerkzeugspezifisch eine von mehreren Funktionen bzw. Betriebsparameter bestimmt.

19. Putzwerkzeug nach einem der vorhergehenden Ansprüche 17 bis 18, **dadurch gekennzeichnet, dass** das Freischaltorgan (7) einen magnetischen Codierungskorpus (8) besitzt.

20. Putzwerkzeug nach Anspruch 19, **dadurch gekennzeichnet, dass** der magnetische Codierungskorpus (8) im Bereich einer kupplungsseitigen Stirnseite des Putzwerkzeuges (2) angeordnet ist.

21. Putzwerkzeug nach einem der vorhergehenden Ansprüche 17 bis 20, **dadurch gekennzeichnet, dass** das Freischaltorgan (7) integraler Bestandteil des Putzwerkzeugkorpus ist.

22. Putzwerkzeug nach einem der vorhergehenden Ansprüche 17 bis 21, wobei das Freischaltorgan (7) mit dem Putzwerkzeugkorpus vorzugsweise lösbar verbunden ist.

23. Putzwerkzeug nach Anspruch 22, wobei das Freischaltorgan (7) formschlüssig auf den Putzwerkzeugkorpus aufschnappbar ist.

24. Putzwerkzeug nach einem der vorhergehenden Ansprüche 17 bis 23, wobei das Freischaltorgan (7) in einen Ring (8) integriert ist, der an einer kupplungsseitigen Stirnseite des Putzwerkzeugs angeordnet ist.

25. Putzwerkzeug nach einem der vorhergehenden Ansprüche 17 bis 24, wobei das Freischaltorgan (7) als Stabmagnet ausgebildet ist.

26. Putzwerkzeug nach einem der vorhergehenden Ansprüche 17 bis 25, wobei das Freischaltorgan (7) als Magnetklebestreifen ausgebildet ist.

27. Putzwerkzeug nach Anspruch 24, wobei die Codiereinrichtung derart ausgebildet ist, dass diese durch die Anzahl, magnetische Orientierung und / oder magnetische Feldstärke der Magnete je nach Putzwerkzeugtyp codiert ist.

28. Putzwerkzeug nach Anspruch 24, wobei nur an bestimmten Stellen, vorzugsweise einander gegenüberliegenden Seiten, am Umfang des Putzwerkzeuges magnetisches Material vorgesehen ist.

29. Elektrische Zahnputzvorrichtung, insbesondere -bürste, mit einem Handteil (1) nach einem oder mehreren der vorhergehenden Ansprüche 1 bis 16 in Kombination mit einem daran ankuppelbaren Putzwerkzeug (2) nach einem oder mehreren der vorhergehenden Ansprüche 17 bis 28.

30. Elektrische Zahnputzvorrichtung, insbesondere -bürste, mit einem Handteil (1) nach Anspruch 12 in Kombination mit einem daran ankuppelbaren Putzwerkzeug (2), welches mit dem Handteil (1) kompatibel ist, aber ein Freischaltorgan (7) nicht aufweist.

## Claims

1. A handle part (1) of an electric tooth cleaning or toothbrush device (1, 2) having a coupling part to couple a toothbrush or cleaning tool (2), particularly a brush attachment, having a drive (23) to drive the coupled toothbrush or cleaning tool, as well as having a control device (27) to control the drive, wherein the control device (27) has a contactless functioning operation locking device (100), which can be released by a releasing body (7), which releasing body (7) is formed as a magnetic field generator, wherein the operation locking device (100) can or is released by the releasing body (7) when the cleaning tool is coupled with the handle part, wherein the control device (27) has a encoding detection device (5) to detect an encoding of a releasing body (7) of the coupled cleaning tool (2), **characterized in that** depending on the detected encoding of the cleaning tool (2), at least one of the following operating parameters can be adjusted: cleaning speed, cleaning frequency, rotational speed, desired cleaning time, drive movement, and/or press-on pressure threshold value.

2. The handle part according to Claim 1, **characterized in that** the handle part (1) is selected and controlled by multiple specific functions or operating parameters, as a function of the respectively detected type of cleaning tool (2).

3. The handle part according to any of the preceding claims, **characterized in that** the operation locking device (100) can be released, as a function of a signal of the encoding detection device (5).

4. The handle part according to any of the preceding claims, wherein a switch of the handle part (1), preferably an ON/OFF switch of the drive (23), is provided for activating the encoding detection device (5), wherein the drive (23) can be activated after a positive response of the encoding detection device (5) or after deactivation of the operation locking device (100).

5. The handle part according to any of the preceding claims, **characterized in that** the operation locking device (100) is designed electronically.

6. The handle part according to any of the preceding claims, **characterized in that** the encoding detection device (5) is designed to operate without contact.

7. The handle part according to any of the preceding claims, **characterized in that** the encoding detection device (5) has a signal receiver (20) to receive an encoding signal from the cleaning tool (2), in particular from the releasing body (7).

8. The handle part according to any of the preceding claims, **characterized in that** the encoding detection device (5) has a magnetic detection device (6, 9, 10) to detect a magnetic encoding of the respectively coupled cleaning tool (2), in particular the releasing body (7).

9. The handle part according to any of the preceding claims, **characterized in that** the encoding detection device (5) has a detection device (9), in particular a switching circuit or the like, to detect a magnetic and/or electromagnetic encoding of the respectively coupled cleaning tool (2), in particular the releasing body (7).

10. The handle part according to any of the preceding claims, **characterized in that** the control device has a Hall element or an LC oscillator.

11. The handle part according to any of the preceding claims, **characterized in that** the encoding detection device (5) is arranged in a closed, in particular liquid-tight, handle part housing (26).

12. The handle part according to any of the preceding claims, **characterized in that** the releasing body (7) is allocated to the handle part itself for the release of an operation locking device (100) of the handle part (1), and the drive shaft (28) of the handle part (1) is designed as a releasing body (7), for example through magnetization.

13. The handle part according to any of the preceding claims, **characterized in that** the encoding detection device is arranged in the area of the connection or coupling of the cleaning tool with the handle part.

14. The handle part according to any of the preceding claims, **characterized in that**, depending on the detected encoding of the cleaning tool (2), operating parameters of the handle part (1) are automatically adjustable.

15. The handle part according to any of the preceding claims, **characterized in that**, depending on the detected encoding of the cleaning tool (2), an individual activation of the control device is provided for the drive of the handle part.

16. The handle part according to any of the preceding claims, **characterized in that**, depending on the detected encoding, it is possible to differentiate among 2 to 10 types of cleaning tools (2) on the handle part.

17. A brush or cleaning tool, in particular a brush attachment, having a coupling part to couple an electric tooth cleaning device to a handle part (1), wherein a releasing body (7), which releasing body (7) is formed as a magnetic field generator, is provided for contactless release of an operation locking device (100) of the handle part (1), wherein the releasing body (7) has an encoding device, which is designed as a generator, which has a magnetic or electromagnetic encoding function, **characterized in that** the encoding device is designed and/or arranged such that at least one of the following operation parameters can be adjusted: cleaning speed, cleaning frequency, rotational speed, desired cleaning time, drive movement, and/or press-on pressure threshold value.

18. The cleaning tool according to Claim 17, **characterized in that** the coding device determines one of multiple functions or operating parameters specific to the cleaning tool.

19. The cleaning tool according to any of preceding Claims 17 to 18, **characterized in that** the releasing body (7) has a magnetic encoding body (8).

20. The cleaning tool according to Claim 19, **characterized in that** the magnetic encoding body (8) is arranged in the area of a coupling-side front of the cleaning tool (2).

21. The cleaning tool according to any of preceding Claims 17 to 20, **characterized in that** the releasing body (7) is an integral component of the cleaning tool body.

22. The cleaning tool according to any of preceding Claims 17 to 21, wherein the releasing body (7) is preferably detachably connected to the cleaning tool body.

23. The cleaning tool according to Claim 22, wherein the releasing body (7) can be snapped onto the cleaning tool body with a positive-fit.

24. The cleaning tool according to any of preceding Claims 17 to 23, wherein the releasing body (7) is integrated into a ring (8), which is arranged on a coupling-side front of the cleaning tool.

25. The cleaning tool according to any of preceding Claims 17 to 24, wherein the releasing body (7) is designed as a bar magnet.

26. The cleaning tool according to any of preceding Claims 17 to 25, wherein the releasing body (7) is designed as an adhesive magnetic strip.

27. The cleaning tool according to Claim 24, wherein the encoding device is designed such that said device is encoded by the number, magnetic orientation, and/or magnetic field strength of the magnets, depending on the type of cleaning tool.

28. The cleaning tool according to Claim 24, wherein magnetic material is only provided at certain locations, preferably on opposing sides, on the circumference of the cleaning tool.

29. An electric tooth cleaning device, in particular a tooth cleaning brush, with a handle part (1) according to one or more of the preceding Claims 1 to 16, in combination with a cleaning tool (2), which can be coupled thereon, according to one or more of the preceding Claims 17 to 28.

30. The electric tooth cleaning device, in particular a tooth cleaning brush, having a handle part (1) according to Claim 12, in combination with a cleaning tool (2), which can be coupled thereon, and which is compatible with the handle part (1), but which does not have a releasing body (7).

## Revendications

1. Partie de manche (1) d'un dispositif électrique de nettoyage des dents ou de brosse à dents (1, 2) ayant une partie de couplage pour coupler une brosse à dents ou un outil de nettoyage (2), particulièrement un accessoire de brosse, ayant un entraînement (23) pour entraîner la brosse à dents ou l'outil de nettoyage couplé, ayant également un dispositif de contrôle (27) pour contrôler l'entraînement, dans laquelle le dispositif de contrôle (27) a un dispositif de verrouillage d'opération (100) fonctionnant sans contact, qui peut être libéré par un organe de libération (7), lequel organe de libération (7) est formé en tant que générateur de champ magnétique, dans laquelle le dispositif de verrouillage d'opération (100) peut être ou est libéré par l'organe de libération (7) lorsque l'outil de nettoyage est couplé à la partie de manche, dans laquelle le dispositif de contrôle (27) a un dispositif de détection de codage (5) pour détecter un codage d'un organe de libération (7) de l'outil de nettoyage (2) couplé, **caractérisée en ce qu'**en fonction du codage détecté de l'outil de nettoyage (2), au moins un des paramètres d'utilisation suivants peut être ajusté : la vitesse de nettoyage, la fréquence de nettoyage, la vitesse de rotation, le temps de nettoyage souhaité, le mouvement d'entraînement, et/ou la valeur seuil de pression d'appui.

2. Partie de manche selon la revendication 1, **caractérisée en ce que** la partie de manche (1) est choisie et contrôlée par plusieurs fonctions spécifiques ou paramètres d'utilisation, en fonction du type d'outil de nettoyage (2) respectivement détecté.

3. Partie de manche selon l'une quelconque des revendications précédentes, **caractérisée en ce que** le dispositif de verrouillage d'opération (100) peut être libéré, en fonction d'un signal du dispositif de détection de codage (5).

4. Partie de manche selon l'une quelconque des revendications précédentes, dans laquelle un interrupteur de la partie de manche (1), de préférence un interrupteur marche/arrêt de l'entraînement (23), est fourni afin d'activer le dispositif de détection de codage (5), dans laquelle l'entraînement (23) peut être activé après une réponse positive du dispositif de détection de codage (5) ou après désactivation du dispositif de verrouillage d'opération (100).

5. Partie de manche selon l'une quelconque des revendications précédentes, **caractérisée en ce que** le dispositif de verrouillage d'opération (100) est conçu électroniquement.

6. Partie de manche selon l'une quelconque des revendications précédentes, **caractérisée en ce que** le dispositif de détection de codage (5) est conçu pour fonctionner sans contact.

7. Partie de manche selon l'une quelconque des revendications précédentes, **caractérisée en ce que** le dispositif de détection de codage (5) a un récepteur de signal (20) pour recevoir un signal de codage de l'outil de nettoyage (2), en particulier de l'organe de libération (7).

8. Partie de manche selon l'une quelconque des revendications précédentes, **caractérisée en ce que** le dispositif de détection de codage (5) a un dispositif de détection magnétique (6, 9, 10) pour détecter un codage magnétique de l'outil de nettoyage (2) respectivement couplé, en particulier l'organe de libération (7).

9. Partie de manche selon l'une quelconque des revendications précédentes, **caractérisée en ce que** le dispositif de détection de codage (5) a un dispositif de détection (9), en particulier un circuit de commutation ou similaires, pour détecter un codage magnétique et/ou électromagnétique de l'outil de nettoyage (2) respectivement couplé, en particulier l'organe de libération (7).

10. Partie de manche selon l'une quelconque des revendications précédentes, **caractérisée en ce que** le dispositif de contrôle a un élément de Hall ou un oscillateur LC.

11. Partie de manche selon l'une quelconque des revendications précédentes, **caractérisée en ce que** le dispositif de détection de codage (5) est arrangé dans un logement de partie de manche (26) fermé, en particulier étanche aux liquides.

12. Partie de manche selon l'une quelconque des revendications précédentes, **caractérisée en ce que** l'organe de libération (7) est affecté à la partie de manche elle-même pour la libération d'un dispositif de verrouillage d'opération (100) de la partie de manche (1), et l'arbre de transmission (28) de la partie de manche (1) est conçu en tant qu'organe de libération (7), par exemple par l'intermédiaire d'une magnétisation.

13. Partie de manche selon l'une quelconque des revendications précédentes, **caractérisée en ce que** le dispositif de détection de codage est arrangé dans la zone de la connexion ou du couplage de l'outil de nettoyage avec la partie de manche.

14. Partie de manche selon l'une quelconque des revendications précédentes, **caractérisée en ce que**, en fonction du codage détecté de l'outil de nettoyage (2), les paramètres d'utilisation de la partie de manche (1) sont automatiquement réglables.

15. Partie de manche selon l'une quelconque des revendications précédentes, **caractérisée en ce que**, en fonction du codage détecté de l'outil de nettoyage (2), une activation individuelle du dispositif de contrôle est fournie pour l'entraînement de la partie de manche.

16. Partie de manche selon l'une quelconque des revendications précédentes, **caractérisée en ce que**, en fonction du codage détecté, il est possible de se différencier 2 à 10 types d'outils de nettoyage (2) sur la partie de manche.

17. Brosse ou outil de nettoyage, en particulier un accessoire de brosse, ayant une partie de couplage pour coupler un dispositif électrique de nettoyage des dents à une partie de manche (1), dans lequel un organe de libération (7), lequel organe de libération (7) est formé en tant que générateur de champ magnétique, est fourni pour une libération sans contact d'un dispositif de verrouillage d'opération (100) de la partie de manche (1), dans lequel l'organe de libération (7) a un dispositif de codage, qui est conçu en tant que générateur, qui a une fonction de codage magnétique ou électromagnétique, **caractérisé en ce que** le dispositif de codage est conçu et/ou arrangé de telle sorte qu'au moins un des paramètres d'utilisation suivants peut être ajusté : la vitesse de nettoyage, la fréquence de nettoyage, la vitesse de rotation, le temps de nettoyage souhaité, le mouvement d'entraînement, et/ou la valeur seuil de pression d'appui.

18. Outil de nettoyage selon la revendication 17, **caractérisé en ce que** le dispositif de codage détermine une des multiples fonctions ou paramètres d'utilisation spécifiques à l'outil de nettoyage.

19. Outil de nettoyage selon l'une quelconque des revendications précédentes 17 à 18, **caractérisé en ce que** l'organe de libération (7) a un organe de codage magnétique (8).

20. Outil de nettoyage selon la revendication 19, **caractérisé en ce que** l'organe de codage magnétique (8) est arrangé dans la zone d'une partie frontale côté couplage de l'outil de nettoyage (2).

21. Outil de nettoyage selon l'une quelconque des revendications précédentes 17 à 20, **caractérisé en ce que** l'organe de libération (7) est un composant d'un seul tenant du corps de l'outil de nettoyage.

22. Outil de nettoyage selon l'une quelconque des revendications précédentes 17 à 21, dans lequel l'organe de libération (7) est de préférence attaché de façon détachable au corps de l'outil de nettoyage.

23. Outil de nettoyage selon la revendication 22, dans lequel l'organe de libération (7) peut être emboîté sur le corps de l'outil de nettoyage avec un ajustement positif.

24. Outil de nettoyage selon l'une quelconque des revendications précédentes 17 à 23, dans lequel l'organe de libération (7) est intégré dans un anneau (8), qui est arrangé sur une partie frontale côté couplage de l'outil de nettoyage.

25. Outil de nettoyage selon l'une quelconque des revendications précédentes 17 à 24, dans lequel l'organe de libération (7) est conçu en tant qu'aimant en barreau.

26. Outil de nettoyage selon l'une quelconque des revendications précédentes 17 à 25, dans lequel l'organe de libération (7) est conçu en tant que bande magnétique adhésive.

27. Outil de nettoyage selon la revendication 24, dans lequel le dispositif de codage est conçu de telle sorte que ledit dispositif est codé par le nombre, l'orientation magnétique, et/ou l'intensité du champ magnétique des aimants, en fonction du type d'outil de nettoyage.

28. Outil de nettoyage selon la revendication 24, dans lequel le matériau magnétique est uniquement fourni à certains emplacements, de préférence sur des côtés opposés, sur la circonférence de l'outil de nettoyage.

29. Dispositif électrique de nettoyage des dents, en particulier une brosse de nettoyage des dents, avec une partie de manche (1) selon l'une ou plusieurs des revendications précédentes 1 à 16, en combinaison avec un outil de nettoyage (2), qui peut être couplé dessus, selon l'une ou plusieurs des revendications précédentes 17 à 28.

30. Dispositif électrique de nettoyage des dents, en particulier une brosse de nettoyage des dents, ayant une partie de manche (1) selon la revendication 12, en combinaison avec un outil de nettoyage (2), qui peut être couplé dessus, et qui est compatible avec la partie de manche (1), mais qui n'a pas d'organe de libération (7).
